(19) Europäisches Patentamt
European Patent Office
Office européen des brevets

(11) Veröffentlichungsnummer: **0 234 390 B1**

# (12) EUROPÄISCHE PATENTSCHRIFT

(45) Veröffentlichungstag der Patentschrift: **12.09.90**

(51) Int. Cl.⁵: **C08L 77/00**, C08L 25/04, C08L 25/16

(21) Anmeldenummer: **87101782.8**

(22) Anmeldetag: **09.02.87**

## (54) Thermoplastische formmassen auf der Basis von Polyamiden und Styrolcopolymeren.

(30) Priorität: **12.02.86 DE 3604349**

(43) Veröffentlichungstag der Anmeldung: **02.09.87 Patentblatt 87/36**

(45) Bekanntmachung des Hinweises auf die Patenterteilung: **12.09.90 Patentblatt 90/37**

(84) Benannte Vertragsstaaten: **BE CH DE FR GB IT LI NL**

(56) Entgegenhaltungen:
**EP-A- 0 000 583**
**EP-A- 0 080 720**
**EP-A- 0 140 377**
**DE-A- 2 348 752**
**US-A- 3 313 769**
**US-A- 4 350 794**

**PATENT ABSTRACTS OF JAPAN, Band 9, Nr. 222 (C-302)[1945], 9. September 1985; & JP - A - 60 86161 (MITSUBISHI KASEI KOGYO K.K.) 15.05.1985**
**PATENT ABSTRACTS OF JAPAN, Band 9, Nr. 222 (C-302)[1945], 9. September 1985; & JP - A - 60 86162 (MITSUBISHI KASEI KOGYO K.K.) 15.05.1985**
**PATENT ABSTRACTS OF JAPAN, Band 9, Nr. 222 (C-302)[1945], 9. September 1985; & JP - A - 60 86163 (MITSUBISHI KASEI KOGYO K.K.) 15.05.1985**

(73) Patentinhaber: **BASF Aktiengesellschaft, Carl-Bosch-Strasse 38, D-6700 Ludwigshafen(DE)**

(72) Erfinder: **Taubitz, Christof, Dr., In der Dreispitz 15, D-6706 Wachenheim(DE)**
Erfinder: **Seiler, Erhard, Dr., Erpolzheimer Strasse 1, D-6700 Ludwigshafen(DE)**
Erfinder: **Hambrecht, Juergen, Dr., Am Klosterwald 31, D-4400 Münster-Hiltrup(DE)**
Erfinder: **Mitulla, Konrad, Dr., Schwalbenweg 31, D-6700 Ludwigshafen(DE)**
Erfinder: **Reimann, Horst, Dr., Adelheidstrasse 26, D-6520 Worms(DE)**

(56) Entgegenhaltungen: (Fortsetzung)
**PATENT ABSTRACTS OF JAPAN, Band 7, Nr. 161 (C-176)[1306], 15. Juli 1983; & JP - A - 58 71952 (ASAHI DOW K.K.) 28.04.1983**

EP 0 234 390 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft neue thermoplastische Formmassen enthaltend

A) 5 bis 95 Gew.-% eines Polyamids

B) 5 bis 95 Gew.-% eines gegebenenfalls in Gegenwart von bis zu 50 Gew.-%, bezogen auf (B), eines die Schlagzähigkeit verbessernden Zusatzes hergestellten oder mit bis zu 50 Gew.-% eines gepfropften Kautschuks abgemischten Copolymeren, aufgebaut aus

$B_1$) 50 bis 99,9 Gew.-% Styrol und/oder substituierten Styrolen der allgemeinen Formel I

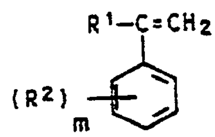

(I)

wobei $R^1$ eine Alkylgruppe mit 1 bis 4 C-Atomen oder ein Wasserstoffatom.

$R^2$ eine Alkylgruppe mit 1 bis 6 C-Atomen oder ein Halogenatom und m 0, 1, 2 oder 3 ist.

$B_2$) 0, 1 bis 30 Gew.-Z eines Lactamgruppen (II) enthaltenden Monomeren

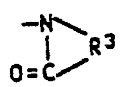

(II)

wobei $R^3$ eine zweiwertige, verzweigte oder lineare Alkylengruppe mit 2 bis 15 C-Atomen und

$B_3$) 0 bis 48 Gew.-% weiteren Comonomeren, und

C) 0 bis 50 Gew.-%, bezogen auf A) + B), eines schlagzäh modifizierenden Kautschuks.

Außerdem betrifft die Erfindung die Verwendung derartiger Formmassen zur Herstellung von Formkörpern und aus den Formmassen hergestellte Formkörper.

In der US A 3 134 746 werden Polymermischungen (Blends) aus Polycaprolactam und Acrylnitril-Butadien-Styrol-Copolymeren (ABS) beschrieben.

Durch die Unverträglichkeit der beiden den Blend bildenden Polymeren weisen die aus diesen Mischungen hergestellten Formkörper schlechte mechanische Eigenschaften auf; es kommt zu schichtweisen Spaltungen (Delaminierungen) in den Formkörpern.

Nach der US A 3 485 777 werden Peroxide eingesetzt, um die Verträglichkeit von Polyamiden und Styrolpolymeren zu erhöhen. Die auf diese Weise hergestellten Produkte zeigen jedoch nur schlecht reproduzierbare Eigenschaften, d.h. die Konstanz der Produktqualität ist nicht gewährleistet.

In der DE-A 3 037 520 werden Blockcopolymere mit Blöcken aus Styrol-Copolymeren und Polyamiden beschrieben. Diese Massen weisen einen sehr hohen Schmelzindex auf, was bei der Verarbeitung nachteilig ist.

Gemäß der EP-A 80 720 wird versucht, dieses Problem durch den Einsatz von Styrolpolymeren mit Carbonsäureamidgruppen zu umgehen. Aus diesen Massen hergestellte Produkte zeigen jedoch eine starke Vergilbungsneigung.

Der Erfindung lag daher die Aufgabe zugrunde, Formmassen aus Polyamiden und Styrolpolymeren zur Verfügung zu stellen, die gute mechanische Eigenschaften aufweisen und zu Formkörpern hoher Produktqualität verarbeitbar sind.

Erfindungsgemäß wird diese Aufgabe gelöst durch thermoplastische Formmassen, enthaltend

A) 5 bis 95 Gew.-% eines Polyamids

B) 5 bis 95 Gew.-% eines gegebenfalls in Gegenwart von bis zu 50 Gew.-% bezogen auf B), eines die Schlagzähigkeit verbessernden Zusatzes hergestellten oder mit bis zu 50 Gew.-%, bezogen auf B) eines gepfropften Kautschuks abgemischten Copolymeren, aufgebaut aus

$B_1$) 50 bis 99,9 Gew.-% Styrol und/oder substituierten Styrolen der allgemeinen Formel I

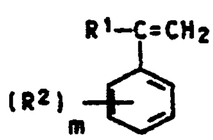

(I)

wobei $R^1$ eine Alkylgruppe mit 1 bis 4 C-Atomen oder ein Wasserstoffatom.

$R^2$ eine Alkylgruppe mit 1 bis 6 C-Atomen oder ein Halogenatom und m 0, 1, 2 oder 3 ist.

$B_2$) 0,1 bis 30 Gew.-% eines Lactamgruppen (II) enthaltenden Monomeren

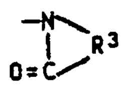

(II)

wobei $R^3$ eine zweiwertige, verzweigte oder lineare Alkylgruppe mit 2 bis 15 C-Atomen ist, und

$B_3$) 0 bis 48 Gew.-% weiteren Comonomeren, und

C 0 bis 50 Gew.-%, bezogen auf A) + B), eines schlagzäh modifizierenden Kautschuks.

Bevorzugte Formmassen dieser Art sind den Unteransprüchen zu entnehmen.

Die erfindungsgemäßen thermoplastischen Formmassen zeichnen sich durch gute mechanische Eigenschaften, insbesondere eine hohe Schlagzähigkeit (auch mehraxial) und eine gute Lösungsmittelbeständigkeit aus. Die Widerstandsfähigkeit gegen Chemikalien, Wärme und Abrieb ist wesentlich besser als bei Styrolpolymeren und im Vergleich zu Polyamiden zeigen die erfindungsgemäßen Formmassen eine wesentlich geringere Formschrumpfung. Von besonderem Vorteil ist auch die gute Verarbeitbarkeit und Fließfähigkeit.

Als Komponente A enthalten die erfindungsgemäßen Formmassen ein Polyamid in einer Menge von 5 bis 95 Gew.-%, vorzugsweise 10 bis 90, besonders bevorzugt 35 bis 80 Gew.-%.

Hinsichtlich Struktur und Molekulargewicht der Polyamide bestehen keine besonderen Beschränkungen, doch werden Polyamide mit einem Molekulargewicht im Bereich von 8000 bis 60000 im allgemeinen bevorzugt.

Beispiele für bevorzugte Polyamide sind die Polyamide, die sich von Lactamen mit 7 bis 13 Ringgliedern ableiten, wie Polycaprolactam, Polycapryllactam oder Polylauryllactam, sowie Polyamide, die durch Umsetzung von Dicarbonsäuren mit Diaminen erhalten werden. Alkandicarbonsäuren mit 6 bis 12, insbesondere mit 6 bis 10 C-Atomen, Terephthalsäure und Isophthtalsäure zählen zu den bevorzugten Dicarbonsäuren. Alkandiamine mit 6 bis 12, insbesondere 6 bis 8 Kohlenstoffatomen, p-Xylylendiamin, Di-(4-aminophenyl)methan, Di-(4-aminocyclohexyl)methan oder 2,2-Di-(4-amino-phenyl)propan zu den bevorzugten Diaminen. Sowohl die Dicarbonsäuren als auch die Diamine können einzeln oder in beliebigen Kombinationen eingesetzt werden. Ebenso ist es möglich und häufig vorteilhaft. Mischungen mehrerer der genannten Polyamide für die thermoplastischen Formmassen zu verwenden.

Besonders technische Bedeutung haben Polycaprolactam, Polyhexamethylenadipinsäureamid sowie Polyamide, die aus Hexamethylendiamin und Iso- und/oder Terephthalsäure aufgebaut sind, erlangt.

Die erfindungsgemäß verwendbaren Polyamide sind an sich bekannt oder können nach an sich bekannten Verfahren aus den Monomeren hergestellt werden, so daß sich hier nähere Angaben erübrigen.

Als Komponente B) enthalten die erfindungsgemäßen Formmassen Copolymere aufgebaut aus Styrol und/oder substituierten Styrolen $B_1$ und Lactamgruppen (II) enthaltenden Monomeren $B_2$) und, gegebenfalls, weiteren copolymerisierbaren Monomeren $B_3$).

Der Anteil des Styrols und/oder der substituierten Styrole $B_1$) an der Komponente B) liegt im Bereich von 50 bis 99,9 Gew.-%, vorzugsweise 70 bis 95 Gew.-%. Die substituierten Styrole werden durch die allgemeine Formel I charakterisiert

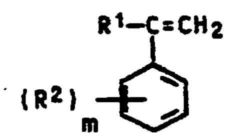

(I)

wobei $R^1$ eine Alkylgruppe mit 1 bis 4 C-Atomen, vorzugsweise eine Methylgruppe oder ein Wasserstoffatom, $R^2$ ein Halogenatom, vorzugsweise Chlor oder eine Alkylgruppe mit 1 bis 6 C-Atomen, vorzugsweise eine Methyl- oder Ethylgruppe, und m 0, 1, 2 oder 3 ist. Beispiele hierfür sind α-Methylstyrol, o-, m-, p-Methylstyrol, m-Ethylstyrol, Dimethylstyrol, Chlorstyrol und Gemische dieser Verbindungen.

Selbstverständlich können auch Mischungen verschiedener substituierter Styrole oder Mischungen aus Styrol und substituierten Styrolen eingesetzt werden, was häufig sogar Vorteile mit sich bringt.

Als erfindungswesentliche Komponente enthalten die Copolymere B) die Komponente $B_2$). Die verträglichkeitsverbessernde Wirkung dieser Komponente ist wahrscheinlich auf eine Wechselwirkung der funktionellen Gruppe der Komponente $B_2$) mit den Komponenten $B_1$) und A) zurückzuführen. Ob es sich dabei um physikalische Wechselwirkungen oder um die Ausbildung kovalenter Bindungen handelt, kann nicht mit Sicherheit gesagt werden.

Bei der Komponente $B_2$ handelt es sich um Monomere mit Lactamgruppen (II).

Diese enthalten eine Lactamgruppe der allgemeinen Formel II

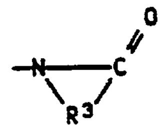

(II)

wobei R3 eine verzweigte oder lineare Alkylengruppe mit 2 bis 15 C-Atomen darstellt.

Von diesen Monomeren werden solche Verbindungen bevorzugt, die gemäß Houben-Weyl, Methoden der organischen Chemie, Bd. X/2, S. 511–87 (1975) und Band XIV/2, S. 111–131 zu Polyamiden polymerisierbar oder copolymerisierbar sind.

Nur stellvertretend seien hier β-Propiolactame (Azetidin-2-one) der allgemeinen Formel V

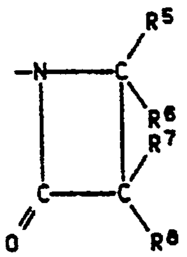

(III)

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 H. Bastian in Angew. Chem. 80 (1968) 304–312 beschrieben (ein Beispiel hierfür ist 3,3'-Dimethyl-3-propiolactam.) Weitere Beispiele sind 2-Pyrrolidone

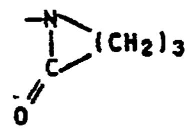

ε-Caprolactam

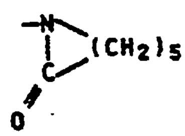

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen II wie in (IV)

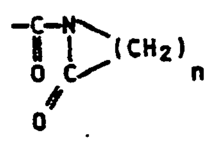

(IV)

über eine Carbonylgruppe am Stickstoff in das Monomere $B_2$ eingebaut.

Ein besonders bevorzugtes Beispiel hierfür ist N-(Meth)acryloyl-ε-Caprolactam (V

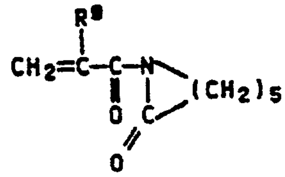

(V)

wobei $R^9$ ein Wasserstoffatom oder eine Methylgruppe ist.

Der Anteil der Monomeren $B_2$ mit Lactamgruppen an der Komponente B) beträgt 0,1 bis 30 Gew.%, vorzugsweise 0,1 bis 5 Gew.%, bezogen auf die Komponente B.

Daraus ergeben sich für Komponente B) beispielsweise folgende Zusammensetzungen

$B_1$) 95 bis 99,9 Gew.% Styrol, α-Methylstyrol und/oder p-Methylstyrol

$B_2$) 0,1 bis 5 Gew.% N-(Meth)acryloyl-ε-caprolactam

oder, falls Monomere $B_3$ enthalten sind

$B_1$) 55 bis 91% Styrol, α-Methylstyrol und/oder p-Methylstyrol

$B_2$) 0,1 bis 5 Gew.% N-(Meth)acryloyl-ε-caprolactam

$B_3$) 8 bis 40 Gew.% (Meth)acrylnitril.

Wie bereits bei einigen vorstehend genannten besonders bevorzugten Komponenten B) angegeben, können neben den Komponenten B1) und B2) gegebenenfalls noch bis zu 48 Gew.% weiterer Comonomerer vorhanden sein. Hier seien nur beispielsweise (Meth)acrylnitril und (Meth)acrylsäurealkylester mit 1 bis 12 C-Atomen im Alkylrest genannt. Dies sind z.B. Methylacrylat, Ethylacrylat, i- oder n-Propylacrylat, prim.-, sek.- oder tert.-Butylacrylat, 2-Ethylhexylacrylat und Dodecylacrylat.

Die Herstellung der Komponente B) kann durch an sich bekannnte Polymerisationsverfahren, wie Masse-, Suspensions-. Emulsions- oder Lösungspolymerisation kontinuierlich oder diskontinuierlich erfolgen. Solche Verfahren sind an sich bekannt und in der Literatur beschrieben, so daß sich hier nähere Angaben erübrigen.

Der Anteil der Komponente B) an den erfindungsgemäßen Formmassen beträgt 5 bis 95, vorzugsweise 10 bis 90 und besonders bevorzugt 20 bis 65 Gew.%, bezogen auf das Gesamtgewicht der Komponenten A) und B).

Die eingesetzten Polymeren B) haben ein bevorzugtes Molekulargewicht von 5 000 bis 1 000 000, im besonderen von 80 000 bis 500 000.

Die Komponente B) kann auch schlagzäh modifiziert sein. Solche Polymere sind dem Fachmann als schlagzähes Polystyrol (HIPS) oder ABS bekannt. Dabei werden die vinylaromatischen Polymeren in Gegenwart eines die Schlagzähigkeit verbessernden Zusatzes (Schlagzähmodifiers) hergestellt oder die vinylaromatischen Polymeren mit gepfropften Kautschuken abgemischt. Als kautschukartige Polymere seien z.B. genannt Polybutadien, Styrol-Butadien, Styrol-b-Butadien, Acrylnitril-Butadien, Ethylen-Propylen-, Polyacrylat und Polyisopren-Kautschuke.

Die Kautschuke können in an sich bekannter Weise hergestellt werden, wobei die Zugabereihenfolge der einzelnen Monomeren in bekannter Art modifiziert werden kann. So ist es bei der Herstellung durch Emulsionspolymerisation möglich, zuerst das Butadien (gegebenenfalls unter Zusatz von Styrol, Acrylnitril, (Meth)acrylester zu polymerisieren, gegebenenfalls unter Zusatz von geringen Mengen Vernetzer, und anschließend auf die so gewonnene Pfropfgrundlage anderer Monomere oder Gemische, wie (Meth)acrylsäureester, Acrylnitril, Styrol oder andere polymerisierbare Monomere aufzupfropfen.

Der Anteil dieser Kautschuke, bezogen auf die Komponente B) kann bis zu 50 Gew.%, vorzugsweise bis zu 30 Gew.%, betragen.

Neben der in der Komponente B) gegebenenfalls vorhandenen, gepfropften Kautschuken, wie Polybutadien-Kautschuk, Acrylat-Kautschuk, Styrol-Butadien-Kautschuk, Polybuten-Kautschuk, hydrierten Styrol-Butadien-Kautschuk, Acrylnitril-Butadien-Kautschuk, Ethylen-Propylen-Kautschuk, Polyisopren-Kautschuk können diese auch ungepfropft zur Verbesserung der Schlagzähigkeit als Komponente C zugesetzt werden. Als Kautschuke für diesen Zweck seien weiter erwähnt styrolgepfropfte Ethylen-Propylen-Kautschuke, thermoplastische Polyester-Elastomere, Ethylenkautschuke und lonomere, Styrol-Butadien-Blockcopolymere einschließlich AB-, ABA-, ABA-tapering, Stern- und Blockpolymerisaten, entsprechende Isopren-Blockcopolymerisate und teilweise oder vollständig hydrierte Blockcopolymere.

Der Anteil dieser Kautschuke kann bis zu 50 Gew.% bezogen auf das Gesamtgewicht der Komponenten A) + B) betragen.

Zusätzlich zu den zwingend vorhandenen Komponenten A) und B) können die erfindungsgemäßen thermoplastischen Formmassen übliche Zusatzstoffe und Verarbeitungshilfsmittel in einer Menge von bis zu 40 Gew.%, vorzugsweise bis zu 20 Gew.% enthalten. Solche üblichen Zusatzstoffe sind beispielsweise Hitze- und Lichtstabilisatoren, Gleit- und Entformungsmittel, und Färbemittel, wie z.B. Farbstoffe und Pigmente. Weiterhin zählen hierzu Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, ferner Phosphor oder phosphorhaltige Verbindungen.

Auch niedermolekulare oder hochmolekulare Polymere, wie Polystyrol, hochschlagzähes Polystyrol (HIPS), Styrol-Acrylnitril-Copolymere, Acryl-nitril-Butadien-Styrol-Copolymere, Polyester, Polycarbonate, Nitrilkautschuk und Dien-Öle oder Wachse sind als Zusatzstoff verwendbar.

Herstellungsverfahren zur Herstellung der thermoplastischen Formmassen sind an sich bekannt. Zweckmäßigerweise mischt man die Einzelkomponenten bei Temperaturen von 250 bis 320°C in üblichen Mischvorrichtungen, z.B. Knetern, Banbury-Mischern und Einschneckenextrudern, vorzugsweise jedoch in Zweischneckenextrudern. Um eine möglichst homogene Formmasse zu erhalten, ist eine intensive Durchmischung notwendig; unter bestimmten Umständen können die die Formmasse bildenden Komponenten auch miteinander reagieren. Die Mischungsreihenfolge der Komponenten kann variiert werden.

Das heißt, es können alle Komponenten gemeinsam gemischt werden oder es können zwei oder drei Komponenten vorgemischt werden, bevor die weiteren Komponenten zugesetzt werden.

Wie bereits erwähnt, zeichnen sich die erfindungsgemäßen Formmassen durch eine außerordentlich hohe Schlagzähigkeit aus. Gegenüber Polyamiden zeigen sie eine stark verminderte Formschrumpfung und eine wesentlich geringere Wasseraufnahme, weswegen sie sich besonders zur Herstellung von Formkörpern mit hoher Dimensionsstabilität eignen. Die Verarbeitung kann durch Blasverformen wie Extrudieren zur Herstellung von Rohren, Tafeln, Flaschen und Beschichtungen erfolgen.

Bei der Beschreibung der die erfindungsgemäßen Formmassen bildenden Komponenten werden folgende Abkürzungen verwendet:

VZ: Viskositätszahl, bestimmt bei 25°C an einer 0,5 %igen Lösung in Dimethylformamid mit einem Ubbelohde-Viskosimeter nach DIN 53 726/8

MFI: Schmelzindex, bestimmt nach DIN 53 735 bei 190°C und 2,16 kg Belastung

$M_n$: Zahlenmittel des Molekulargewichts (vgl. B. Vollmert, Grundriß der makromolekularen Chemie Bd. III, S. 122 ff; E. Vollmert-Verlag Karlsruhe 1979)

Beispiele 1 bis 7

Für die Herstellung von Formmassen wurden folgende Komponenten eingesetzt:

Komponente A

A Polycaprolactam mit $M_n$= 34 000

Komponente B

B/1 Copolymer aus
$B_1$ 99 Gew.% Styrol
$B_2$ 1 Gew.% N-Methacryloyl-ε-caprolactam
hergestellt durch kontinuierliche Copolymerisation unter Zusatz von 20 Gew.% bezogen auf $B_1$ + $B_2$ Ethylbenzol bei 140°C und einem Druck von 700 kPa über 5 h. Es wurde ein statistisches Copolymeres mit einem Molekulargewicht von 82 000 (Gewichtsmittel) erhalten.

B/2 Copolymer aus
$B_1$ 66,2 Gew.% Styrol
$B_2$ 0,8 Gew.% N-Methacryloyl-ε-caprolactam
$B_3$ 33 Gew.% Acrylnitril
hergestellt wie B/1; $M_w$=76 000 (Gewichtsmittel)

B/3 Copolymer aus
$B_1$ 74 Gew.% Styrol
$B_2$ 1 Gew.% N-Methacryloyl-ε-caprolactam
$B_3$ 25 Gew.% Acrylnitril
hergestellt in Gegenwart von 14 Gew.%, bezogen auf $B_1$ + $B_2$ + $B_3$, eines anionisch hergestellten Polybutadienlatex (Buna CB NX 529 C (TM), Fa. Bayer), $M_w$= 250 000 Gewichtsmittel

Zu Vergleichszwecken wurden folgende Komponenten B* hergestellt:

B*/1 Polystyrol, hergestellt wie B/9

B*/2 Copolymer aus
$B_1$ 66,7 Gew.% Styrol
$B_3$ 33,3 Gew.% Acrylnitril
hergestellt wie B/2.

B*/3 Copolymer aus
$B_1$ 74,8 Gew.% Styrol
$B_3$ 25,2 Gew.% Acrylnitril
hergestellt wie B/3.

Zur Kautschukmodifizierung wurden folgende Kautschuke eingesetzt:

K/1 Styrol-Butadien-Styrol-Blockcopolymer mit einem Gehalt von 30 Gew.% Styrol (Cariflex (TM) TR 1102)

K/2 Polybutadienkautschuk mit einem Kern aus 60 Gew.% Polybutadien und einer Schale aus Styrol/Methylmethacrylat (Gewichtsverhältnis 1:1), hergestellt durch Emulsionspolymerisation (Paraloid (TM) KM 653).

Die Polymeren wurden bei 270°C gemäß den Angaben in der Tabelle in einem Zweischneckenextruder abgemischt.

Die Schlagzähigkeit wurde gemäß DIN 53 453, die Izod-Kerbschlagzähigkeit gemäß ISO 180 bestimmt.

Die Zusammensetzung der Formmassen und die Ergebnisse der Schlagzähigkeits- und Kerbschlagzähigkeitsmessungen sind der Tabelle zu entnehmen.

Tabelle

| Beispiel | Zusammensetzung (Gew.%) | | | Schlagzähigkeit DIN 53 453 kJ/m² | Izod-Kerbschlagz. ISO 180/4 A kJ/m² |
|---|---|---|---|---|---|
| | A | B | K | | |
| 1 | 50 A | 50 B/1 | - | 22,6 | 3,1 |
| 1 /V 1) | 50 A | 50 B*/1 | - | 13,0 | 0,7 |
| 2 | 60 A | 40 B/2 | - | 27,2 | 3,0 |
| 2 /V 1) | 60 A | 40 B*2 | - | 15,2 | 1,0 |
| 3 | 60 A | 40 B/3 | - | 29,6 | 2,4 |
| 3 /V 1) | 60 A | 40 B*/3 | - | 12,6 | 1,0 |
| 4 | 48 A | 40 B/1 | 12 K/1 | 47,0 | 8,3 |
| 4 /V 1) | 48 A | 40 B*/1 | 12 K/1 | 15,0 | 1,4 |
| 5 | 65 A | 28 B/1 | 7 K/1 | 41,0 | 6,4 |
| 6 | 60 A | 40 B/3 | - | 54,2 | 9,7 |
| 6 /V 1) | 60 A | 40 B*/3 | - | 15,6 | 1,4 |
| 7 | 57 A | 38 B/3 | 5 K/1 | 76,0 | 11,1 |

1) Vergleichsbeispiele

Die Ergebnisse der Tabellen zeigen, daß sich die erfindungsgemäßen Formmassen im Vergleich zu Formmassen ohne die erfindungswesentliche Komponente $B_2$) durch eine erheblich bessere Schlagzähigkeit auszeichnen.

**Patentansprüche**

1. Thermoplastische Formmassen, enthaltend
A) 5 bis 95 Gew.-% eines Polyamids
B) 5 bis 95 Gew.-% eines gegebenenfalls in Gegenwart von bis zu 50 Gew.-%, bezogen auf B), eines die Schlagzähigkeit verbessernden Zusatzes hergestellten oder mit bis zu 50 Gew.-%, bezogen auf B) eines gepfropften Kautschuks abgemischten Copolymeren, aufgebaut aus
$B_1$) 50 bis 99,9 Gew.-Z Styrol und/oder substituierten Styrolen der allgemeinen Formel I

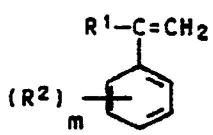

(I)

wobei $R^1$ eine Alkylgruppe mit 1 bis 4 C-Atomen oder ein Wasserstoffatom.
$R^2$ eine Alkylgruppe mit 1 bis 6 C-Atomen oder ein Halogenatom und m 0, 1, 2 oder 3 ist,
$B_2$) 0,1 bis 30 Gew.-Z eines Lactamgruppen (II) enthaltenden Monomeren

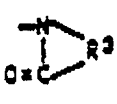

(II)

wobei $R^3$ eine zweiwertige, verzweigte oder lineare Alkylengruppe mit 2 bis 15 C-Atomen, ist, und
$B_3$) 0 bis 48 Gew.-% weiteren Comonomeren, und
C) 0 bis 50 Gew.-%, bezogen auf A) + B), eines schlagzäh modizierenden Kautschuks.

2. Thermoplastische Formmassen nach Anspruch 1, gekennzeichnet durch einen Gehalt von 1 bis 50 Gew.-%, bezogen auf A) + B) des schlagzämodifizierenden Kautschuks C.

3. Verwendung von Formmassen gemäß den Ansprüchen 1 und 2 zur Herstellung von Formteilen.

4. Formkörper, hergestellt aus Formmassen gemäß den Ansprüchen 1 und 2 als wesentlichen Komponenten.

## Revendications

1. Matières à mouler thermoplastiques, contenant:

A) de 5 à 95% en poids d'un polymide

B) de 5 à 95% en poids d'un copolymère, préparé éventuellement en présence de jusqu'à 50% en poids, par rapport à B, d'un additif améliorant la résistance au choc, ou mélangé à un caoutchouc greffé en une proportion allant jusqu'à 50%, par rapport à B, constitué au départ de

$B^1$) 50 à 99,9% en poids de styrène et/ou de styrènes substitués de formule générale I

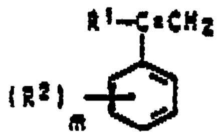

(I)

où $R_1$ est un groupement alkyle possédant de 1 à 4 atomes de C ou un atome d'hydrogène, $R_2$ est un groupement alkyle possédant de 1 à 6 atomes de carbone ou un atome d'halogène et m vaut 0, 1, 2 ou 3,

$B^2$) 0,1 à 30% en poids d'un monomère renfermant un groupement lactame (II)

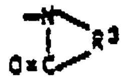

(II)

où $R^3$ est un groupement alkylène bivalent, ramifié ou linéaire, possédant de 2 à 15 atomes de C et

$B^3$ 0 à 48% en poids d'autres monomères et

C) 0 à 50% en poids, calculés par rapport à A) + B), d'un caoutchouc modifié pour le rendre résistant au choc.

2. Matières à mouler thermoplastiques selon la revendication 1, caractérisées en ce qu'elles possèdent une teneur en caoutchouc modifié pour le rendre résistant au choc C de 1 à 50% en poids, calculée par rapport à A) + B).

3. Utilisation de matières à mouler thermoplastiques selon les revendications 1 et 2 pour la fabrication de mièces moulées.

4. Corps moulés, préparés au départ de matières à mouler selon les revendications 1 et 2 utilisées en qualité de constituants essentiels.

## Claims

1. A thermoplastic molding material containing

A) from 5 to 95% by weight of a nylon and

B) from 5 to 95% by weight of a copolymer optionally prepared in the presence of up to 50% by weight, based on B), of an impact strength improver or blended with up to 50% by weight, based on B), of a grafted rubber and composed of

$B_1$) from 50 to 99,9% by weight of styrene and/or substituted styrenes of the formula I

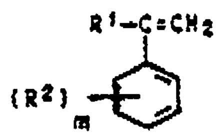

(I)

where $R^1$ is alkyl of 1 to 4 carbon atoms or hydrogen, $R^2$ is alkyl of 1 to 6 carbon atoms or halogen and m is 0, 1, 2 or 3,

$B_2$) from 0,1 to 30% by weight of a monomer containing lactam groups (II)

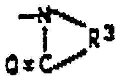 (II)

where $R^3$ is a divalent, branched or staight-chain alkylene group of 2 to 15 carbon atoms, and

$B_3$) from 0 to 48% by weight of further comonomers, and

C) from 0 to 50% by weight, based on A) + B), of an impact-modifying rubber.

2. A thermoplastic molding material as claimed in claim 1, which contains from 1 to 50% by weight, based on A) + B), of an impact-modifying rubber C.

3. Use of a molding material as claimed in claims 1 and 2 for the production of a molding.

4. A molding produced from a molding material as claimed in either claim 1 or 2 as essential component.